# EUROPEAN PATENT APPLICATION

(11) **EP 1 586 431 A1**
(43) Date of publication of application: **19.10.2005**
(21) Application number: 03777208.4
(22) Date of filing: 03.12.2003
(51) Int. Cl.: B28B 11/00, B01D 39/20, B01D 46/00, F01N 3/022

(54) **LIQUID AGENT INJECTOR FOR CERAMICS HONEYCOMB AND SEALING METHOD USING IT**

(30) Priority: 05.12.2002 JP 2002353736
(71) Applicant: ASAHI GLASS COMPANY LTD., Tokyo 100-8405 (JP)
(72) Inventor: Tanaka, Nobuyuki, c/o Asahi Glass Company, Ltd, Yokohama-shi, Kanagawa 221-8755 (JP); Shimao, Yuji, c/o Asahi Glass Company, Ltd, Yokohama-shi, Kanagawa 230-0045 (JP); Maeno, Hiroshi, c/o Asahi Glass Company, Ltd, Yokohama-shi, Kanagawa 221-8755 (JP)
(74) Representative: Müller-Boré & Partner Patentanwälte
(86) International application number: PCT/JP2003/015485
(87) International publication number: WO 2004/050318

(57) **Abstract**

A device for injecting a liquid agent into a plurality of substantially parallel through-holes of a honeycomb, comprising a table for mounting a plurality of honeycombs, an image recognizing section for recognizing the through-holes to process image data, a first injecting section for injecting the liquid agent into through-holes subjected to image recognizing using a plurality of injection nozzles, and a second injecting section for injecting the liquid agent into through-holes which remain untreated at the first injecting section using a single injection nozzle, wherein the image recognizing section, the first injecting section and the second injecting section can process honeycombs independently.

## Description

### TECHNICAL FIELD

The present invention relates to a method for injecting a liquid agent into through-holes in a ceramic honeycomb used for a filter for removing particulates in exhaust gas from an internal combustion engine and a liquid agent injecting device.

### BACKGROUND ART

Various methods for sealing both end surfaces of a ceramic honeycomb having a plurality of substantially parallel through-holes partitioned by porous walls have been proposed. Among these, there is a method of masking with a mask, film or the like the portion other than those into which a sealing material is to be injected (see, for example, JP-A-2001-1332). However, this method can not be available unless the ceramic honeycomb has a predetermined form accuracy.

As a method without using the mask, there is a method that a sealing material is directly injected to a position to be sealed (see JP-A-5-23507). In this method, however, the injection is carried out using a single nozzle while a ceramic honeycomb and a sealant delivery system are moved relatively. Accordingly, it takes much time because the number of cells of a ceramic honeycomb is several thousands. Further, this publication fails to describe specifically a positional information recognizing means for the cells.

There is also proposal of another method that a masking material is injected using several kinds and numbers of nozzles according to situations based on image data of an end surface of a ceramic honeycomb and a sealant is injected after the curing of the masking material (see JP-A-6-226109). In this method, however, all processes are carried out at a sole location without moving except for reversing the end surface. Accordingly, it takes much time to process a ceramic honeycomb even though an injection nozzle device of high speed and high precision is used, and therefore, there is a problem of producibility. Further, in this method, a single nozzle is used for all portions having an irregular shape for which a multi-nozzle device is not available. Accordingly, if this method is employed for a ceramic honeycomb having many irregular portions in shape, use of the multi-nozzle device is restricted and there causes the problem of productivity.

Further, there is proposal of another method that the image of an end surface of a ceramic honeycomb having subjected to sealing is taken, defective through-hole portions are perforated with a needle based on processed image data, and the perforated portions are mended and at the same time, the checking of the sealed portions is carried out (see JP-B-7-6378) . However, the proposed method is a method of detecting and mending defective sealed portions and does not propose a method of sealing with good producibility even for a ceramic honeycomb without having a sufficient form accuracy.

It is an object of the present invention to provide a liquid agent injecting device for a ceramic honeycomb, capable of sealing with good productivity even for a ceramic honeycomb poor in form accuracy and a method of sealing a ceramic honeycomb using such device.

### DISCLOSURE OF THE INVENTION

In accordance with the present invention, there is provided a device for injecting a liquid agent into a plurality of substantially parallel through-holes which penetrate between both end surfaces of a ceramic honeycomb and are partitioned by porous partition walls, the liquid agent injecting device for a ceramic honeycomb being characterized by comprising a table for mounting a plurality of ceramic honeycombs, an image recognizing section for recognizing the through-holes of the ceramic honeycombs on the table to form image data and processing the image data, a first injecting section having a set of injecting nozzles capable of rotating around the axis substantially perpendicular to an end surface of a ceramic honeycomb subjected to image recognizing at the image recognizing section and injecting a liquid agent into the through-holes based on a control signal from the image data recognizing section, and a second injecting section having a single injection nozzle for injecting the liquid agent into through-holes which remain untreated at the first injecting section, among the through-holes to be subjected to liquid agent injection at the first injecting section, of the ceramic honeycomb subjected to the injection treatment at the first injecting section, based on a control signal from the image recognizing section, wherein the image recognizing section, the first injecting section and the second injecting section can process ceramic honeycombs independently.

### BRIEF DESCRIPTION OF THE DRAWINGS

Fig. 1 is a schematic perspective view of the injecting device according to the present invention.
Fig. 2 shows an example of a nozzle injection pattern in a case that a liquid agent is injected in a checker board form.
Fig. 3 is a diagram of a multi-nozzle rotated.
Fig. 4 is a diagram showing an example of nozzle injection pattern in a case that the liquid agent is injected into cells of irregular shape.

### BEST MODE FOR CARRYING OUT THE INVENTION

The liquid agent injecting device for a ceramic honeycomb of the present invention (hereinbelow, referring to as the injecting device) comprises a table for mounting a plurality of ceramic honeycombs (hereinbelow, referred to simply as the honeycombs), an image recognizing section for recognizing the image of a plurality of substantially parallel through-holes (hereinbelow, referred to as cells) partitioned by porous partition walls of the honeycombs mounted on the table and sending signals for controlling nozzles of first and second injecting sections to a first injecting section and a second injecting section which are described hereinbelow, the first injecting section having a set of injection nozzles (hereinbelow, referred to as the multi-nozzles) which can be rotated around the axis extending substantially perpendicular to an end surface of the honeycombs and injecting a liquid agent into the cells to which the liquid agent is to be injected through the multi-nozzles (hereinbelow, referred to as the injection-required cells), based on a control signal from the image recognizing section (hereinbelow, referred simply to as the control signal), and the second injecting section located independent from the first injecting section, having a single injection nozzle (hereinbelow, referred to as the single nozzle) to inject the liquid agent into cells not subjected to injection in the first injecting section among the injection-required cells, based on the control signal.

In the injecting device, the image recognizing section, the first injecting section and the second injecting section are arranged on the periphery of the table independently so that the plurality of honeycombs mounted on the table can be processed independently by the image recognizing section, the first injecting section and the second injecting section in this order. For example, a rotating table is used for the table, there is a case that the image recognizing section, the first injecting section and the second injecting section are arranged in this order on the periphery of the rotating table clockwise (right-handed) or counter clockwise (left-handed).

In the following, examples of the injecting device and the method for sealing the honeycombs using it will be described with reference to the drawing.

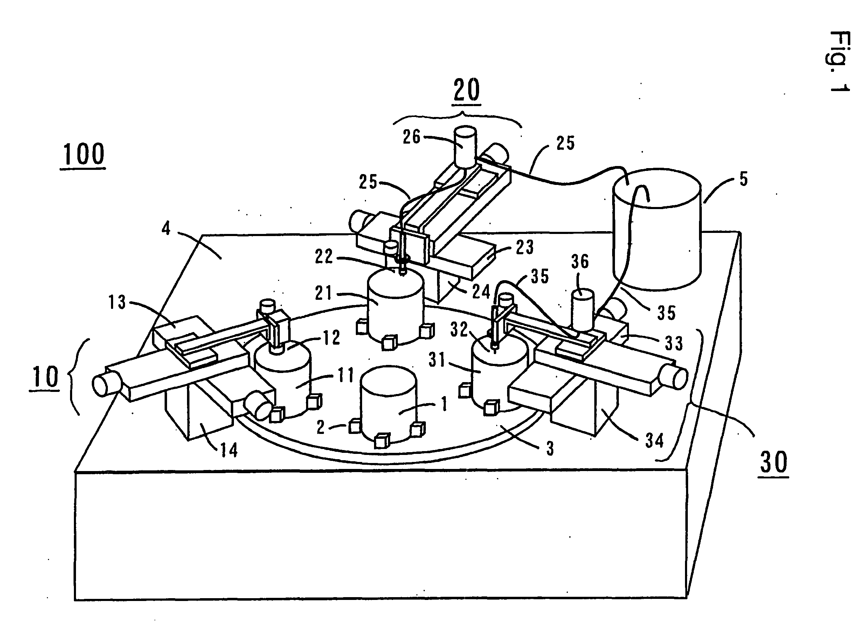

Fig. 1 is a schematic perspective view of the injecting device 100. The table of the injecting device 100 is a rotating table 3. On the rotating table 3, four honeycombs 1, 11, 21 and 31 are fixed with honeycomb fixing jigs 2. However, the number of honeycombs to be mounted on the rotating table 3 is not restricted to four.

The honeycomb 1 is a honeycomb to be subjected to a series of processes, the honeycomb 11 is a honeycomb whose image is to be recognized in the image recognizing section 10, the honeycomb 21 is a honeycomb which has been subjected to the image recognizing in the image recognizing section 10 and is ready for the injection of the liquid agent to the injection-required cells in the first injecting section 20, based on the control signal, and the honeycomb 31 is a honeycomb ready for the injection of the liquid agent in the second injecting section 30 based on the control signal, to the injection-required cells into which the liquid agent has not actually been injected in the first injecting section 20 although this honeycomb has been subjected to the injection process in the first injecting section 20.

The structure of the table is not particularly limited as long as the honeycombs 1 can be processed in the order of the image recognizing section 10, the first injecting section 20 and the second injecting section 30. Accordingly, the rotating table 3 is not always have to be used, but the structure having a fixed table and a belt conveyor disposed on its upper portion so as to circulate the honeycombs, may employed. Further, the table having a leveling device for detecting the level of the end surface of the honeycombs is preferable because the operation of injecting the liquid agent to be conducted afterwards becomes easy.

The image recognizing section 10 comprises a camera 12, a moving mechanism 13 for moving it optionally in a three-dimensional direction and a data processing section (not shown) for generating control signals to the first injecting section 20 and the second injecting section 30, the image recognizing section 10 being mounted on a mounting 14 fixed to a stationary plane 4. If the end surface to be measured, of a fixed honeycomb is inclined, the distance between the nozzles and the end surface changes depending on locations. However, when the image recognizing section 10 has means for measuring the inclination of the end surface, control to be conducted afterwards can be easy. As the detecting means, a contact-type detector having an elastic material such as rubber at its top end may be mentioned. Further, the image recognizing section 10 provided with a display or the like for displaying images from the camera 12 makes confirmation work easy.

The camera 12 is not particularly limited as long as it can recognize the cells correctly. It is preferable to use, for example, a charge-coupled device (CCD) as an image sensor having at least 300,000 pixels. The number of the cells to be recognized at a time by the camera 12 is not particularly limited. However, it preferably has pixels of an integral multiple of the multi-nozzles of the first injecting section 20 because there is no overlapping in image recognition and is efficient. For example, when the number of multi-nozzles is 4, there may be 4 cells x 4 cells = 16 cells, 8 cells x 8 cells = 64 cells, 12 cells x 12 cells = 144 cells and so on.

The moving mechanism 13 is not in particular limited as long as it can control the position correctly. For example, it may be a multiaxial robot. The data processing section may include a numerical coprocessor such as a commercially available personal computer.

The starting point for recognizing data of cells is marked previously on the honeycomb 11, and the image recognition of the data of cells is initiated from the starting point. By the image recognition, data such as heights of honeycomb plane, positions of cells, shapes of cells without deformation, shapes of deformed cells, numbers of cells and so on can be obtained. Further, locations of injection without rotating the multi-nozzles 22 of the first injecting section 20, locations of injection after the multi-nozzles 22 of the first injecting section have been rotated in a plane when the degree of deformation of a cell is large, and locations of injection in the second injecting section 30 in which injection is carried out with a single injection nozzle 32, are recognized respectively.

The honeycomb 1 having subjected to image recognition at the image recognizing section 10 is delivered to the first injecting section 20 where the liquid agent is injected. As the liquid agent, a sealing material or a masking material for preventing the sealing material from entering into a cell into which the sealing material should not be applied, may be mentioned. The viscosity of the liquid agent is not in particular limited as long as the liquid agent can be injected through a nozzle. However, the viscosity of the liquid agent is preferably from 30 to 200 Pa·s because control of the amount of the liquid agent can be easy.

The sealing material may be a dispersion liquid containing ceramic particulates, and the masking material may be emulsion of an organic matter such as a polymer latex. Specifically, the sealing material is preferably a dispersion liquid containing ceramic particulates having a thermal expansion coefficient close to the honeycomb and/or metal particulates which become the ceramic particulates after a heat treatment, in particular, a dispersion liquid containing the same ceramic particulates as the honeycomb and/or metal particulates which become the ceramic particulates after a heat treatment. For example, when a honeycomb made of silicon nitride is used, the sealing material is preferably a dispersion liquid containing silicon nitride particulates and/or metal silicon particulates. As the masking material, various kinds of resinous sealing material such as a silicon type or various kinds of resinous emulsion such as an acrylic type resin emulsion may be mentioned.

The first injecting section 20 comprises multi-nozzles 22, a moving mechanism 23 for moving the multi-nozzles 22 in a three-dimensional direction, a rotation-controlling section (not shown) capable of rotating the multi-nozzles 22 around the axis extending substantially perpendicular to an end surface of the ceramic honeycomb 21, a pipe for the first injecting section 25 communicating a liquid agent tank 5 with the multi-nozzles 22, a liquid agent quantity controlling device 26 for the first injecting section 26 provided in the pipe to control the amount of the liquid agent to be injected, and a communication cable (not shown) such as a co-axial cable to supply the control signal from the image recognizing section to the liquid agent quantity controlling device for the first injecting section, the first injecting section 20 being fixed to the stationary plane 4 by means of a mounting 24.

For the first injecting section 20, it is preferred that the liquid agent is injected through the multi-nozzles 22 into many through-holes as possible whereby it is possible to reduce the work with the single nozzle in the next section. Locations not permitting to use the multi-nozzles 22 are such locations that there is no cell corresponding to at least one nozzle among the multi-nozzles 22, for example. Specifically, there are nozzles at the peripheral edge of the end surface of the honeycomb. The cells of such locations are to be treated in the second injecting section 30.

The number of nozzles on the multi-nozzles 22 is not in particular limited. However, use of an even number is preferred because the number of cells to be treated with the liquid agent is large, continuity of injecting operations is secured and labor time can be shortened. When the number of nozzles on the multi-nozzles 22 is 4, 6 or 8, the continuity of injecting operations is in particular improved, the number of times of moving the nozzles can be reduced and the labor time can be shortened preferably. In view of making the fabrication easy, use of four nozzles is in particular preferred. An odd number of nozzles is also applicable. Use of three or five nozzles can preferably cover an area of linear movement of the multi-nozzles 22 in comparison with the case of use of seven or more nozzles.

When the number of the multi-nozzles 22 is specified, the arrangement of the nozzles in a certain shape is an important factor to determine an injection pattern by the multi-nozzles 22. For example, when they have four nozzles, arrangements of square, parallelogram, rectangle, trapezoid and so on can be considered. However, the arrangement of square or the arrangement of parallelogram is preferred because the injection pattern by the multi-nozzles 22 is simple, the injection time is short and the number of injection-required cells in the coverage area is large.

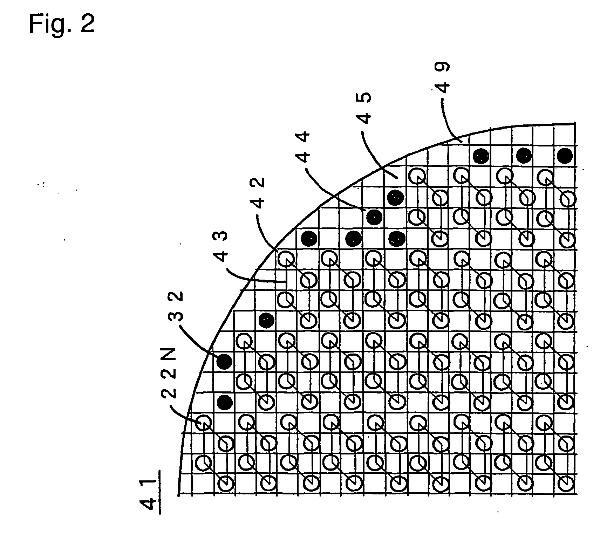

Fig. 2 shows an example of the injection pattern when the multi-nozzles 22 having four nozzles arranged in a form of parallelogram are used and the liquid agent is injected in a checker board form. In Fig. 2, reference numeral 41 designates a 1/4 portion of the end surface of a circular honeycomb. Reference numeral 42 designates a cell subjected to injection by the multi-nozzles 22, numeral 43 designates a parallelogram comprising a set of four cells to which the liquid agent is injected simultaneously at a time, numeral 44 designates a cell to be injected with the single nozzle 32 of the second injecting section and numeral 45 designates a cell to which it is unnecessary to inject the liquid agent (hereinbelow, referred to as the non-injection cell) respectively. The shape of the parallelogram represented by numeral 43 is the same as the arrangement of the multi-nozzles 22 comprising four nozzles.

In the present invention, the multi-nozzles 22 can be rotated in compliance with deformed cells. The deformation of a cell is a distortion in a two-dimensional plane. Accordingly, a considerable portion in a cell having a deformed shape (hereinbelow, referred to as the deformed cell) can be treated with the structure capable of rotating the multi-nozzles in substantially perpendicular to the end surface of the honeycomb, preferably, the structure capable of rotating around the axis perpendicular to the end surface.

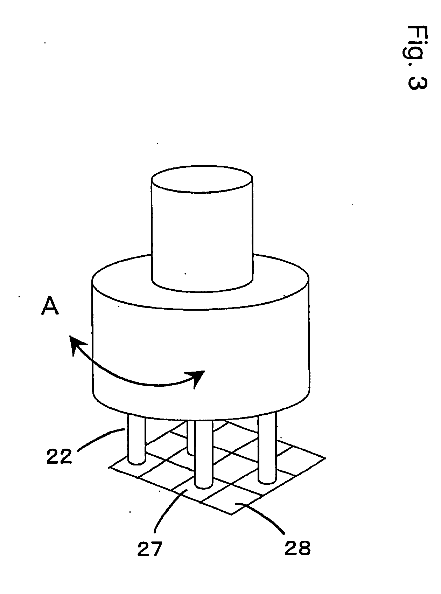

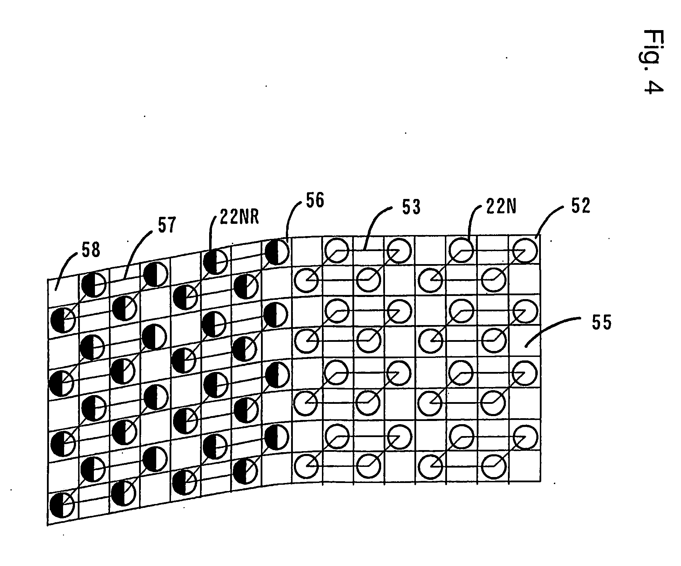

Fig. 3 shows a schematic view of the multi-nozzles 22 rotated (the number of injection nozzles: four, arrangement: parallelogram). In the drawing, reference numeral 22 designates multi-nozzles, numeral 27 designates an injection-required cell, numeral 28 designates a non-injection cell and the character A designates the direction of rotation of the multi-nozzles respectively. Fig. 4 is a schematic view of the injection pattern to deformed cells (number of injection nozzles: four, arrangement: parallelogram). In the drawing, reference numeral 22N designates a nozzle in the multi-nozzles 22, numeral 52 designates a cell subjected to injection by the multi-nozzles 22 without rotation, numeral 53 designates the shape of parallelogram comprising a set of four cells to which the liquid agent is injected simultaneously at a time, numeral 55 designates a non-injection cell, numeral 22NR designates the nozzle 22N used while rotated, numeral 56 designates a deformed cell to be injected after the multi-nozzles 22 are rotated in a plane, numeral 57 designates the shape of parallelogram comprising a set of four cells into which the liquid agent is injected simultaneously at a time by the rotated multi-nozzles 22, and numeral 58 designates a non-injection cell as a deformed cell, respectively.

Even in JP-A-6-226109, multi-nozzles are employed. However, these are not of a rotatable structure. Accordingly, deformed cells can not be applied with the multi-nozzles but there is no choice other than a single nozzle or the like. Accordingly, the injection time increases and productivity decreases.

The shape of nozzle or nozzles is not in particular limited. It is preferred to use a narrow straight tube made of metal such as stainless steel. The outer diameter of the nozzle can be selected appropriately depending on the shape of cells. When the cell has a square shape in cross section, it is preferable that the nozzle has a side of from 0.6 to 0.8 of the length of a side of the square cell. If the outer diameter of the nozzle is too large, and if the nozzle is rotated or the degree of deformation of a cell is large, the nozzle may contact the cell. On the other hand, if the outer diameter of nozzle is too small, the injection time of the liquid agent becomes long and the clogging of the liquid agent in the nozzle is apt to occur.

The moving mechanism 23 is not in particular limited as long as a highly accurate positional control in three dimensions is possible, and therefore, a multiaxial robot may be mentioned. As the mechanism for rotation-control to the multi-nozzles 22 in a plane, a servo motor may be mentioned. There is no particular limitation to the pipe 25 for the first injecting section. However, a pipe made of resin such as tetrafluoroethylene is preferably used because it is flexible. The device 26 for controlling liquid agent quantity for the first injecting section is not in particular limited as long as the quantity of the liquid agent can be controlled. For example, a cylinder with a switch valve may be mentioned.

The honeycomb 21 having subjected to the injection with the multi-nozzles 22 of the first injecting section 20 is delivered to the second injecting section 30 in which the liquid agent is injected through the single nozzle 32 into cells which are injection-required cells but are not yet injected with the liquid agent. The second injecting section 30 comprises the single nozzle 32, a moving mechanism for moving the single nozzle 32 in a three-dimensional direction, a pipe 35 for the second injecting section, extending from the liquid agent tank 5 to the single nozzle 32, a device 36 for controlling the liquid agent quantity for the second injecting section provided in the pipe to control the injection quantity of the liquid agent and a communication cable (not shown) to supply the control signal from the image recognizing section to the device 36 for controlling the liquid agent quantity for the second injecting section.

The moving mechanism 33 is not particularly limited as long as highly accurate positional control in three dimensions can be performed, and therefore, a multiaxial robot or the like may be mentioned. The pipe 35 for the second injecting section is not in particular limited. However, a pipe made of resin such as tetrafluoroethylene is preferably used because it is flexible. The device 36 for controlling the liquid agent quantity for the second injecting section is not in particular limited as long as it can discharge the liquid agent and control the liquid agent quantity. Specifically, a combination of a volume-metering type discharge device such as a gear pump or a pneumatic piston·cylinder and a switching valve such as a needle valve may be mentioned.

In the injecting device, an intermediate injecting section having a smaller number of nozzle than the multi-nozzles 22 of the first injecting section 20 may be provided between the first injecting section 20 and the second injecting section 30. For example, the number of nozzles of the multi-nozzles 22 of the first injecting section 20 is 8, an intermediate injecting section having four nozzles may be provided. When the intermediate injecting section is disposed in the injecting device as shown in Fig. 1, the image recognizing section, the first injecting section, the intermediate injecting section and the second injecting section may be arranged in this order in a clockwise direction in the periphery of the rotating table, for example.

The intermediate injecting section is preferably provided, other than the multi-nozzles having a smaller number of nozzles than the multi-nozzles 22, with a moving mechanism for moving the multi-nozzles in a three-dimensional direction, a rotation-controlling section for rotating the multi-nozzles in a plane independent from the moving mechanism if the case requires, a pipe for the intermediate injecting section extending from the liquid agent tank 5 to the multi-nozzles, a device for controlling liquid agent quantity for the intermediate injecting section provided in the pipe to control the injection quantity of the liquid agent and a communication cable (not shown) for supplying the control signal from the image recognizing section 10 to the device for controlling the liquid agent quantity for the intermediate injecting section. In this case, the moving mechanism, the rotation-controlling section, the pipe, the device for controlling liquid agent quantity and the communication cable as described with reference to the first injecting section 20 can preferably used.

In the injecting device 100, the image recognizing section 10, the first injecting section 20, the intermediate injecting section (optional) and the second injecting section 30 are not always to be singular respectively but may be provided in plural. For example, they may be arranged to be two sets each in the order described above in the periphery of the table, or only the first injecting section 20 may be used in plural sets while the others may be 1 set each. In order to shorten the whole operation time, it is preferable that the first injecting section 20 is used in plural sets to share the end surface of a honeycomb depending on the number of sets. For example, when two sets of first injecting section 20 are used, a method of processing a right half portion by the first 1 set and processing a left half portion by the other 1 set, may be mentioned. When 4 sets of first injecting sections 20 are used, a method of sharing one-fourth portion of the end surface of a honeycomb by each set may be mentioned. When a plurality of first injecting sections are provided, a plurality of ceramic honeycombs can be processed independently by these sections.

Now, explanation will be made as to the sealing method of the present invention. When a masking material is to be injected using the injecting device 100, an image recognition process is carried out in the image recognizing section 10, and then, the masking material is injected into injection-required cells through the multi-nozzles 22 in the first injecting section 20. Finally, the masking material is injected into the injection-required cells which has not been injected, through the single nozzle 32 of the second injecting section to finalize the injection of the masking material. The honeycomb subjected to the injection of masking material is applied with a desired sealing material (ceramic dispersion liquid). As the application method, a method for immersing the honeycomb in the sealing material, a method for coating directly the sealing material or a method for injecting the sealing material may be mentioned.

The sealing-material-injected honeycomb is dried, and then, the masking material is removed by heating or an extracting operation with a medical agent. Then, the honeycomb is heated (sintering, nitriding or the like) at a high temperature of at least 800°C so that the sealing material exhibits desired characteristics. This method allows the injection of the sealing material into the cells in peripheral edge portion (for example, 49 in Fig. 2) which is difficult in using the nozzle. Accordingly, productivity is preferably increased in comparison with the case that the sealing material is injected directly by the injecting device 100. On the other hand, when the sealing material is injected directly using the injecting device 100, a liquid agent is used for the sealing material instead of the masking material and then, sealing is carried out in the same manner as above except that the sealing material is injected into the cells of peripheral edge portion by a separate way such as a manual operation.

### EXAMPLE 1

In order to seal in a form of checker board both end surfaces of honeycombs of silicon nitride each having a diameter of 144 mm, a length of 152 mm and a cell density of 200 cells/6.45 cm², a masking material composed of an acrylic resin type water-soluble emulsion as the liquid agent was injected in the honeycombs by means of the injecting device 100. The injection time by the injecting device was compared with the injection time in the case that the masking material was injected at one location without using the injecting device 100. In the injecting device 100, two sets of first injecting section each having four multi-nozzles 22 of 1 mm in outer diameter, arranged in a form of parallelogram and each one set for the other sections were used. The injection time by using the injecting device could be shortened to about 1/8 in comparison with the injection time in the case without using the injecting device.

The masking-material-injected honeycombs were dried. Then, the honeycombs were immersed in a dispersion liquid having a solid content density of 50% obtained by dispersing in ion-exchange water a mixed powder comprising silicon nitride particulates and metal silicone particulates, each having an average particle diameter of not more than 1 µm, at a mass ratio of 50:50 and a small amount of dispersant, followed by drying and heating at 800°C to burn the masking material. Then, a heat treatment (nitriding, sintering) was carried out at 1,600°C for 2 hours. After finishing the sealing operation, the honeycombs were examined to find no-omission of sealing.

### INDUSTRIAL APPLICABILITY

According to the present invention, a liquid agent can be injected using multi-nozzles capable of rotating around the axis substantially perpendicular to an end surface of a honeycomb even though the honeycomb has a shape poor in accuracy. Accordingly, a high production efficiency is obtainable. Further, since the image recognition and the sealing processes such as the injection process in the first injecting section and the injection process in the second injecting section are carried out at separate locations, throughput per unit time is increased to increase productivity.

## Claims

1. In a device for injecting a liquid agent into a plurality of substantially parallel through-holes which penetrate between both end surfaces of a ceramic honeycomb and are partitioned by porous partition walls, the liquid agent injecting device for a ceramic honeycomb being **characterized by** comprising:
a table for mounting a plurality of ceramic honeycombs, an image recognizing section for recognizing the through-holes of the ceramic honeycombs on the table to form image data and processing the image data,
a first injecting section having a set of injecting nozzles capable of rotating around the axis substantially perpendicular to an end surface of a ceramic honeycomb subjected to image recognizing at the image recognizing section and injecting a liquid agent into the through-holes based on a control signal from the image data recognizing section, and
a second injecting section having a single injection nozzle for injecting the liquid agent into through-holes which remain untreated at the first injecting section, among the through-holes to be subjected to liquid agent injection at the first injecting section, of the ceramic honeycomb subjected to the injection treatment at the first injecting section, based on a control signal from the image recognizing section,
wherein the image recognizing section, the first injecting section and the second injecting section can process ceramic honeycombs independently.

2. The liquid agent injecting device for a ceramic honeycomb according to Claim 1, wherein the number of injection nozzles of the first injecting section is even.

3. The liquid agent injecting device for a ceramic honeycomb according to Claim 1 or 2, wherein the number of injection nozzles of the first injecting section is four.

4. The liquid agent injecting device for a ceramic honeycomb according to Claim 3, wherein four injection nozzles are arranged in a form of square or parallelogram.

5. The liquid agent injecting device for a ceramic honeycomb according to Claim 1, 2, 3 or 4, wherein a plurality of first injecting sections are provided so as to process respective ceramic honeycombs independently.

6. The liquid agent injecting device for a ceramic honeycomb according to any one of Claims 1 to 5, wherein an intermediate injecting section having a plurality of injection nozzles in a smaller number than the first injecting section is provided so as to inject the liquid agent into a ceramic honeycomb which have been treated at the first injecting section but is not yet treated at the second injecting section.

7. The liquid agent injecting device for a ceramic honeycomb according to any one of Claims 1 to 6, wherein the liquid agent is a sealing material or a masking material for sealing the ceramic honeycombs.

8. A method for injecting a liquid agent into a plurality of substantially parallel through-holes which penetrate between both end surfaces of a ceramic honeycomb and are partitioned by porous partition walls, the method for injecting a liquid agent for a ceramic honeycomb being **characterized in that** on a table mounting a plurality of ceramic honeycombs, providing an image recognizing section for recognizing the through-holes of the ceramic honeycombs to form image data and processing the image data, a first injecting section 20 having a set of injecting nozzles 22 capable of rotating around the axis substantially perpendicular to an end surface of a ceramic honeycomb and a second injecting section having a single nozzle; injecting at the first injecting section the liquid agent through the plurality of injection nozzles into the through-holes to be subjected to the liquid agent injection, of the ceramic honeycomb subjected to image recognizing at the image recognizing section, based on a control signal from the image recognizing section, and injecting at the second injecting section the liquid agent into untreated through-holes of the ceramic honeycomb.
